# FASCICULE DE BREVET EUROPEEN

(11) **EP 0 828 108 B1**
(45) Date de publication et mention de la délivrance du brevet: **16.04.2003**
(21) Numéro de dépôt: 97401898.8
(22) Date de dépôt: 07.08.1997
(51) Int. Cl.: F16L 41/04

(54) **Procédé de raccordement de conduits**
Verfahren zum Verbinden von Leitungen
Process for connecting conduits

(30) Priorité: 09.09.1996 FR 9610977
(43) Date de publication de la demande: 11.03.1998
(73) Titulaire: GAZ DE FRANCE (SERVICE NATIONAL), F-75017 Paris (FR)
(72) Inventeur: Blanquet, François, 92240 Cormeilles-En-Parisis (FR); Brazzini, Jean-Pierre, 93150 Blanc Mesnil (FR); Le Cointe, Patrick, 95570 Bouffemont (FR)
(74) Mandataire: Lerner, François

(56) Documents cités:
- EP-A- 0 205 696
- EP-A- 0 235 917
- US-A- 3 778 107
- US-A- 3 805 899
- US-A- 5 350 254

## Description

L'invention concerne un procédé pour poser des conduits dans le sol, sans devoir excaver ce dernier de façon importante.

Typiquement, l'invention s'applique au raccordement d'un tronçon de conduit principal enterré (tel qu'une conduite de gaz combustible sous pression) à un conduit secondaire de distribution, par exemple vers un immeuble.

Tout immeuble d'habitation et de bureaux est pourvu d'un grand nombre de conduits souterrains, qui assurent l'amenée et l'évacuation par exemple de l'eau, du gaz, du courant électrique, etc.

Autrefois, en particulier pour poser des conduits de ce type dans le sol, on excavait des tranchées, on y posait les conduits, puis les tranchées étaient de nouveau comblées.

Ceci est cher, dangereux et peu pratique.

C'est la raison pour laquelle on sait déjà poser des conduits tels que des canalisations sans pour autant devoir excaver des tranchées sur toute la longueur du conduit.

On a ainsi déjà utilisé une foreuse pour enfoncer depuis la surface du sol jusque dans le sous-sol, selon un trajet oblique, un train de tiges qui est constitué d'un grand nombre de barres ou tiges de forage, vissées les unes au bout des autres, et ayant chacune plusieurs mètres de longueur. La direction de la pénétration (c'est-à-dire de la tête de forage qui se trouve à l'extrémité avant du train de tiges) peut alors être relativement bien régulée, de façon que le forage s'effectue d'abord d'une manière oblique vers le bas, jusqu'à arriver à la profondeur prescrite, puis poursuivi dans une direction essentiellement horizontale.

Après réalisation du forage, et avant extraction du train de tiges, le conduit à insérer (par exemple, une canalisation en acier ou en plastique un peu souple) est fixé à l'extrémité avant du train de tiges à l'aide d'un dispositif spécial, et, à l'aide de ce dispositif, et par recul (extraction) progressif du train de tiges, on insère dans le trou de forage déjà en place le conduit à poser.

Ce procédé est utilisé surtout pour poser des conduits sur des tronçons de grande longueur, par exemple de 100 m ou plus, et l'appareil de forage utilisé à cette fin, qui, entre autres, doit présenter un affût dirigé obliquement vers le bas pour guider le train de tiges, est important et pèse au moins deux tonnes car le poids de la foreuse sert en partie de butée à la force servant à la compression du train de tiges vers l'avant.

C'est justement lors du branchement d'immeubles que l'on est cependant confronté à un problème spécial du fait que dans ce cas, le tronçon de conduit principal d'alimentation qui court le plus souvent en-dessous d'une rue, doit assurer la desserte d'un immeuble disposé contre cette rue, par l'intermédiaire du conduit secondaire de branchement.

De ce fait, il est alors encore d'usage de poser ces conduits de branchement d'immeuble d'une manière classique, par excavation d'une tranchée.

Or, on a déjà indiqué que cette technique présente des inconvénients imposant en particulier des travaux lourds de terrassement et de remise ultérieure en état.

Il serait donc souhaitable de disposer, pour ces applications et des applications analogues, d'une solution qui, sur la surface du sol, n'exige qu'un trou extrêmement petit, et non pas une tranchée sur en général l'essentiel du conduit de raccordement à poser.

Les procédés de forage actuellement connus, avec enfoncement du train de tiges obliquement dans le sous-sol, ne conviennent en effet pas à la réalisation de branchement de conduits d'immeuble :

Avec ce procédé, on peut certes piloter le forage d'une manière relativement précise. Mais il n'est pas possible de travailler aussi près que souhaité du conduit principal à brancher, sans risquer simultanément d'endommager ce conduit, lors du forage.

En outre, la mise en place du forage dans le sous-sol doit se faire en un point présentant latéralement un décalage relativement grand par rapport au tronçon principal. L'installation de la foreuse se ferait alors sur le côté opposé de la rue, ce qui impliquerait de barrer la totalité d'un côté de la rue, ou encore, comme l'éloignement latéral qui en résulte ne serait en règle générale pas suffisant, il faudrait barrer le terrain opposé à l'immeuble à raccorder. Rien que les destructions et travaux de remise en état qui en résulteraient incitent à exclure cette technique.

Par ailleurs, le brevet US-A-3 805 899 décrit un procédé de forage dans lequel on utilise un appareil comprenant une succession d'éléments de tiges de forage qui constitue un train de forage, propre à être poussé vers l'avant dans le sol. Mais, cet appareil est particulièrement encombrant et ne permet que de forer de manière retiligne. Il impose par conséquent de créer un puits particulièrement vaste dans lequel on va disposer l'appareil, même pour un forage uniquement destiné à traverser une route. Il n'est par conséquent pas plus adapté à la réalisation d'un tel forage.

Pour apporter une solution satisfaisante aux problèmes posés, l'invention propose donc comme solution, pour éviter d'excaver une tranchée de longueur comparable à celle du conduit secondaire à raccorder
- de creuser un puits de départ et un puits d'arrivée, l'un de ces puits étant creusé jusqu'à dégager l'environnement immédiat du conduit principal, l'autre ayant au moins sensiblement la même profondeur,
- de s'équiper d'un appareil de forage comprenant une succession d'éléments de tiges de forage à disposer bout à bout suivant un axe pour constituer un train de tige de forage, propre à être poussé vers l'avant, dans le sol, par un dispositif d'entraînement de forage,
- de descendre ledit appareil et les éléments de tiges de forage dans l'un desdits puits qui a une section inférieure à celle nécessaire pour qu'un homme puisse y manoeuvrer dedans ledit appareil et le train de tiges de forage dont on sélectionne lesdits éléments de tiges pour qu'ils présentent individuellement une longueur axiale inférieure à la distance séparant la paroi du puits dans lequel on va forer le trou de la paroi opposée,
- de positionner dans ce puits l'axe du train de forage pour forer sensiblement horizontalement, pratiquement au niveau ou à une hauteur d'élévation immédiatement proche du conduit principal, transversalement à lui,
- de serrer latéralement le train de tiges de forage avec des moyens de serrage latéral et pousser le train de tiges sensiblement suivant cet axe,
- de faire tourner les moyens de serrage latéral, afin d'entrainer en rotation le train de tiges,
- après avoir foré sensiblement suivant cet axe jusqu'à relier les deux puits, de passer le conduit secondaire à travers le forage, de manière qu'une portion terminale de celui-ci soit située en haut du puits dans lequel est disposé le tronçon principal,
- de fixer là, à cette portion terminale, une première partie (ou zone) d'une prise de branchement pour le raccordement des deux conduits,
- de descendre dans le puits ladite portion terminale équipée de sa prise,
- d'y fixer une deuxième partie de ladite prise au conduit principal,
- et de refermer les puits.

L'invention va donc en particulier permettre de réaliser des trous de forage essentiellement horizontaux et y déposer des conduits, moyennant une détérioration aussi petite que possible de leur environnement, en particulier avec seulement deux ouvertures relativement petites aménagées dans la surface du sol.

Typiquement, le puits de départ (voire également le puits d'arrivée) aura une section sensiblement constante sur toute sa hauteur, soit environ 70 cm x 40 cm de section horizontale pour 1 m à 1,5 m de profondeur.

A noter que la mise en place d'un puits de départ vertical dans la zone du tronçon principal à raccorder permet de résoudre simultanément deux problèmes :

Premièrement, on crée là un espace libre pour l'assemblage, qui va être réalisé "à la main" après la pose du conduit de branchement d'immeuble, entre le tronçon principal et le conduit de branchement (avec intervention depuis le haut du puits, via un appareillage d'intervention à distance, de préférence). Le puits de départ est ou bien creusé d'une manière classique, à l'aide d'une pelle mécanique, ou encore est enfoncé verticalement à l'aide d'un procédé spécial, par une technique d'érosion, ce qui est raisonnable car le puits de départ doit de préférence s'étendre jusque approximativement juste en-dessous du tronçon principal à raccorder.

Le deuxième problème à résoudre réside dans le tracé, immédiatement voisin, du tronçon principal à raccorder et du conduit secondaire transversalement l'un à l'autre, c'est-à-dire une disposition de ces conduits immédiatement au-dessus ou au-dessous l'un de l'autre, pour pouvoir ensuite les relier d'une manière simple, et sans franchissement en longueur (à l'aide d'une pièce en T ou d'un autre adaptateur en particulier s'il s'agit de canalisation de gaz ou d'eau).

Quand on commence le forage à partir d'un puits de départ ouvert, traversé par le tronçon principal, le trou de forage peut commencer immédiatement, c'est-à-dire à seulement quelques millimètres, au-dessus ou au-dessous du tronçon principal, en contre-boutement transversal.

Le fait de travailler à partir d'un tel puits de départ permet aussi de réaliser une ligne d'assemblage, essentiellement rectiligne, entre le point de branchement du tronçon principal et le point final du conduit de branchement d'immeuble. On peut en outre commencer le creusement déjà dans cette direction, en règle générale une direction horizontale, de sorte que pendant le forage, il ne faut que peu agir sur la direction. Cette façon de faire permet d'utiliser un train de tiges relativement rigide, avec des éléments de tiges courts (10 cm à 35 cm, typiquement) compatibles avec la dimension horizontale éventuellement la plus petite du puits (de l'ordre de 40 cm, typiquement).

On notera, en outre, qu'il n'est pas raisonnable, dans le cas de travaux partant d'un puits de départ de ce type, de faire avancer le forage par érosion, à l'aide d'eau injectée dans le sol sous haute pression à partir de la tête de forage. Cette eau risquerait en effet de s'accumuler à l'arrière du train de tiges, c'est-à-dire dans le puits de départ.

La rotation du train de tiges permet de racler ou "meuler" le matériau de sol en avant de la tête de forage, ce qui est très intéressant dans des cas particuliers. En outre, la rotation du train de tiges, même sur un angle inférieur à 360° permet d'agir sur la direction d'avance du forage, de préférence en ménageant un biseau asymétrique à la pointe du train de tiges, et en modifiant sa position angulaire par rapport à l'axe de forage.

Par une mise en place de la tige de forage dans la direction de l'axe de forage, qui est essentiellement horizontale, il sera en outre possible d'introduire dans le puits de départ, ou de l'en éloigner, les nouvelles tiges à insérer ou à enlever, et ce dès cette position horizontale, à partir d'un magasin. Ainsi, on évitera presque complètement les difficultés liées à une modification de la direction des tiges lors de leur amenée, comme par exemple un coincement, etc.

Le dispositif d'entraînement de forage par lui-même, qui, comme on l'a déjà dit ci-dessus, assure essentiellement ou exclusivement une poussée vers l'avant dans la direction de l'axe de forage, peut subir une translation longitudinale dans un sens et dans l'autre, dans le puits de départ, parallèlement à l'axe de forage, et ce, au moins sur la longueur d'une tige individuelle. De préférence, le dispositif d'entraînement de forage se déplace dans un sens et dans l'autre entre une position avancée, qui se trouve immédiatement au début du trou de forage dans le puits de départ, et une position en retrait, qui se trouve au voisinage d'un dispositif chargeur/extracteur de tiges, lui-même alors disposé contre la paroi opposée.

De préférence, le puits de départ est réalisé de façon que le tronçon principal à raccorder se trouve en-dessous du chargeur/extracteur de tiges, tandis que le dispositif d'entraînement de forage, qui exige considérablement plus de place, se trouve sensiblement au niveau de ce tronçon principal, son enveloppe pouvant s'étendre jusqu'en dessous dudit tronçon.

Une description plus détaillée de l'invention va maintenant être fournie en référence aux dessins annexés dans lesquels :
- la figure 1 est une vue schématique en perspective des conditions générales d'intervention,
- la figure 2 est une vue agrandie en coupe des conditions d'intervention en sous-sol,
- les figures 3a et 3b montrent en vue schématique de côté, respectivement la partie basse et la partie haute d'une installation de forage utilisable dans l'invention,
- les figures 4a et 4b montrent en vue de face (par rapport à l'axe de forage) les mêmes parties que les figures 3a et 3b,
- la figure 5 est une vue de dessus de l'installation de forage,
- la figure 6 est une étape de l'intervention ultérieure à celle des figures 1 et 2,
- la figure 7 montre moitié en coupe, moitié en vue extérieure, une prise de branchement utilisable pour raccorder le conduit principal au conduit secondaire,
- et les figures 8 et 9 montrent en vue générale deux appareils utilisables pour le positionnement et le raccordement des conduits.

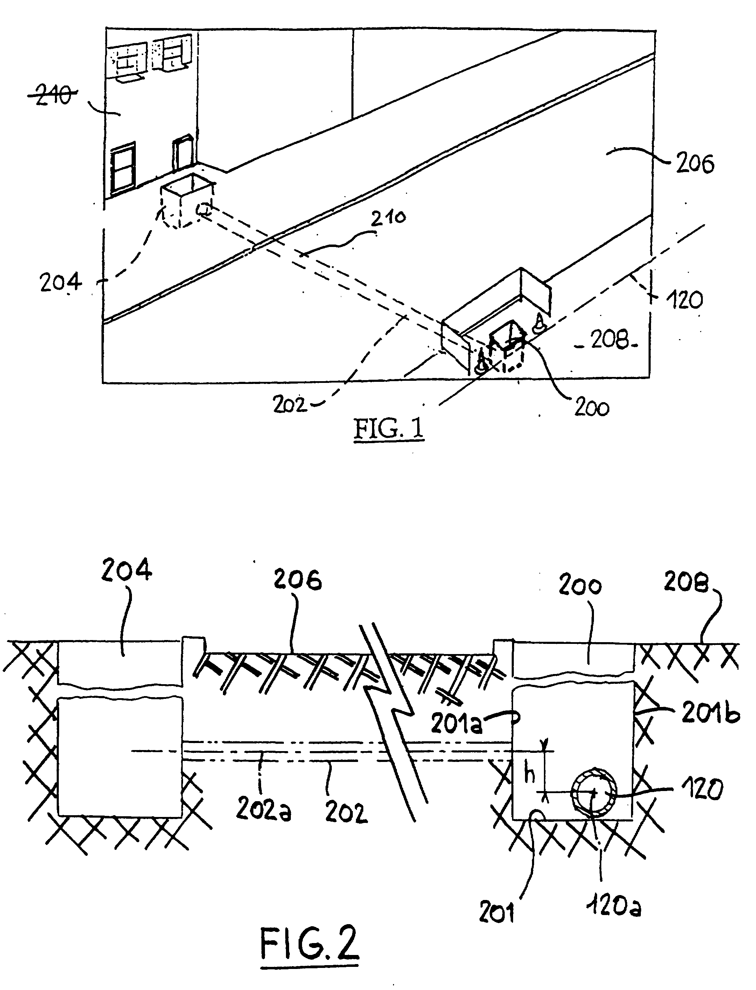

Figure 1, on a représenté schématiquement un chantier qui comprend un puits d'accès 200 de faibles dimensions, creusé dans le sol jusqu'à dégager un tronçon d'un conduit schématisé par la ligne 120 (tel qu'une canalisation de gaz sur laquelle on veut effectuer un branchement secondaire). Le puits 200 est relié à un passage souterrain foré 202 qui débouche dans un second puits 204, de l'autre côté de la rue 206. Comme on peut le voir sur cette figure, les dimensions réduites du puits d'accès 200 permettent de limiter l'étendue du chantier qui n'empiète pas sur la chaussée 206 et n'occupe qu'une surface réduite du trottoir 208 situé du côté de la rue opposée au trottoir où a été ménagé le second puits 204. Typiquement, la section horizontale du premier puits 200 sera inférieure à celle habituellement prévue pour des interventions de même type où le personnel concerné doit descendre dans le puits d'accès pour y travailler (un trou de moins de 1 m², tel que de 40 cm x 70 cm sur 1 m de profondeur paraît approprié). Le puits 204 est avantageusement de section et de profondeur comparables au puits 200.

Sur la figure 2, on retrouve en vue agrandie le premier puits 200 séparé du puits 204 par la chaussée 206.

Le puits 200 a été creusé sensiblement dans la verticale du conduit 120 (dit conduit principal) auquel on va raccorder le conduit secondaire 210 de distribution vers par exemple l'immeuble de la figure 1 qui jouxte le second puits 204.

Sur la figure 2, on a repéré en 202, 202a, respectivement, le tracé et l'axe a priori horizontal de forage du trou par lequel le conduit secondaire à raccorder va pouvoir être mis en place, sans nécessiter de creuser une tranchée en travers de la chaussée 206.

Typiquement, l'axe 202a est transversal, et en l'espèce perpendiculaire, à l'axe 120a du tronçon de canalisation principale 120.

A noter que le puits 200 a été creusé de manière à dégager le conduit principal 120 et s'étend donc jusqu'en dessous de ce conduit, lequel est malgré tout disposé à proximité du fond 201 du puits 200, tout en étant plus proche de la paroi latérale arrière verticale 201b que de la paroi latérale verticale avant 201a dans laquelle le forage du trou 202 doit être réalisé, perpendiculairement à l'axe 120a.

On notera également que la distance en hauteur (h) séparant les axes horizontaux perpendiculaires 120a et 202a est de préférence égale sensiblement à la hauteur du raccord à disposer entre les conduits principaux et secondaires à raccorder dans le puits 200, soit typiquement de quelques centimètres à quelques dizaines de centimètres (par exemple, de la hauteur d'une prise de branchement gaz).

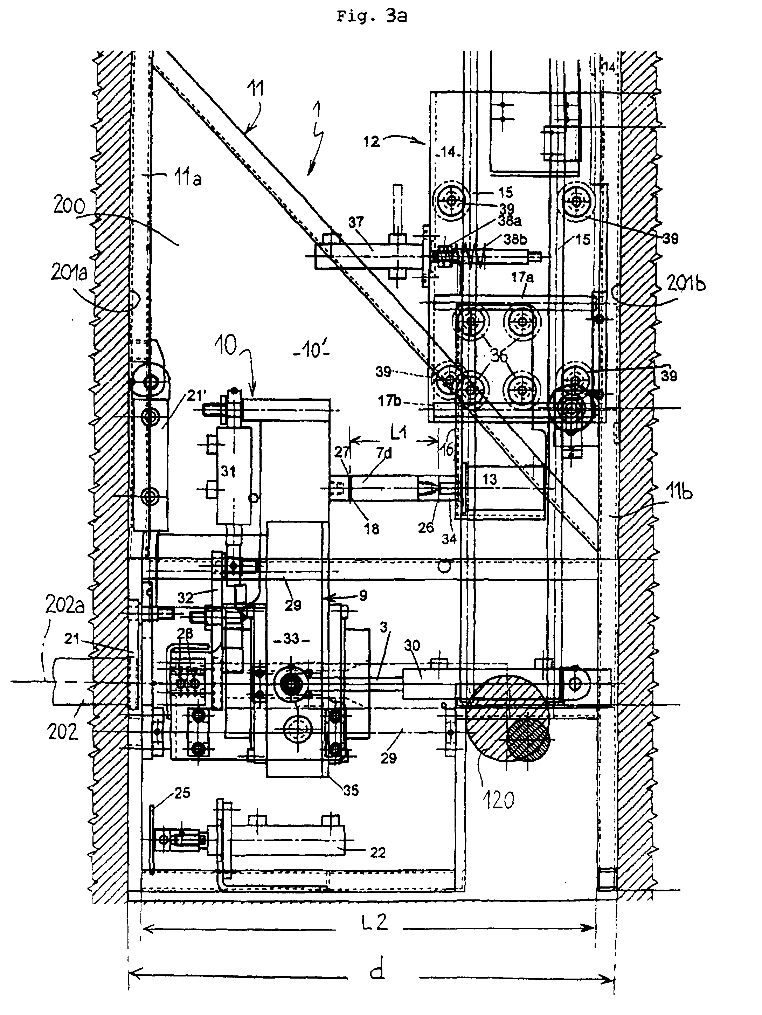

Les figures 3a, 3b, 4a, 4b et 5 sont illustratives du forage du trou 202 par une installation 1.

L'installation 1 comprend l'appareil de forage proprement dit, 10, lequel est disposé dans un bâti ou une tour de forage 11.

La "tour de forage" 11, réalisée en profilés métalliques est de préférence en deux parties télescopiques, mobiles verticalement l'une par rapport à l'autre.

Bien qu'on puisse forer à partir du puits 204, en direction du conduit 120, la partie mobile de la tour de forage, 11, est ici descendue dans le puits 200, par exemple à l'aide d'un treuil à main, non représenté sur les dessins, et peut, dans ce but, être guidée verticalement, par exemple dans un cadre auxiliaire disposé au-dessus du puits, à l'aide de galets de guidage, de glissières, etc.

Dans la partie inférieure de la figure 3a, on peut reconnaître, courant horizontalement, l'axe de forage 202a, et le trou de forage 202 aménagé dans la paroi latérale gauche 201a.

La tour du puits ou bâti de forage 11 comporte, dans la zone du tronçon principal 120, des évidements, ouverts vers le bas, aménagés dans ces parois latérales, pour lui permettre d'être abaissée, par son arête inférieure, jusqu'en dessous de ce tronçon 120 (sur la figure 3a, deux diamètres possibles de conduit ont été figurés).

Les éléments principaux de l'appareil selon l'invention sont tous disposés contre ou dans la tour de forage 11, à savoir :
- le dispositif d'entraînement de forage 9, qui presse vers l'avant le train de tiges vers la gauche, dans la direction de l'axe de forage 202a, ou qui lors de l'extraction du train de tiges du trou foré 202, recule ce train,
- le chargeur/extracteur de tiges, 12, qui permet d'adapter, élément par élément, la longueur du train de tiges 6 se trouvant dans le trou 202, par adjonction ou retrait d'éléments de tiges supplémentaires 7 à son extrémité arrière,
- le magasin de tiges 19, dans lequel sont logées les tiges 7 destinées à être raccordées au train de tiges 6,
- ainsi que la goulotte inclinée 24, dans laquelle tombent les tiges prélevées du train de tiges, pour y être nettoyé par le personnel de manoeuvre, faire l'objet d'un contrôle des détériorations et être regraissé pour une utilisation ultérieure.

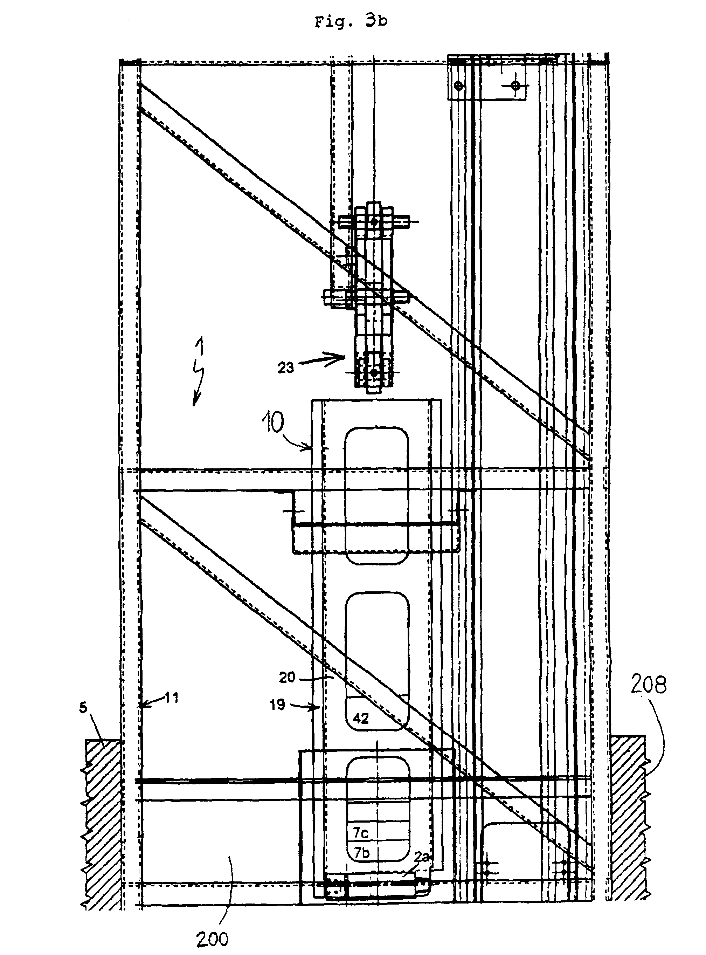

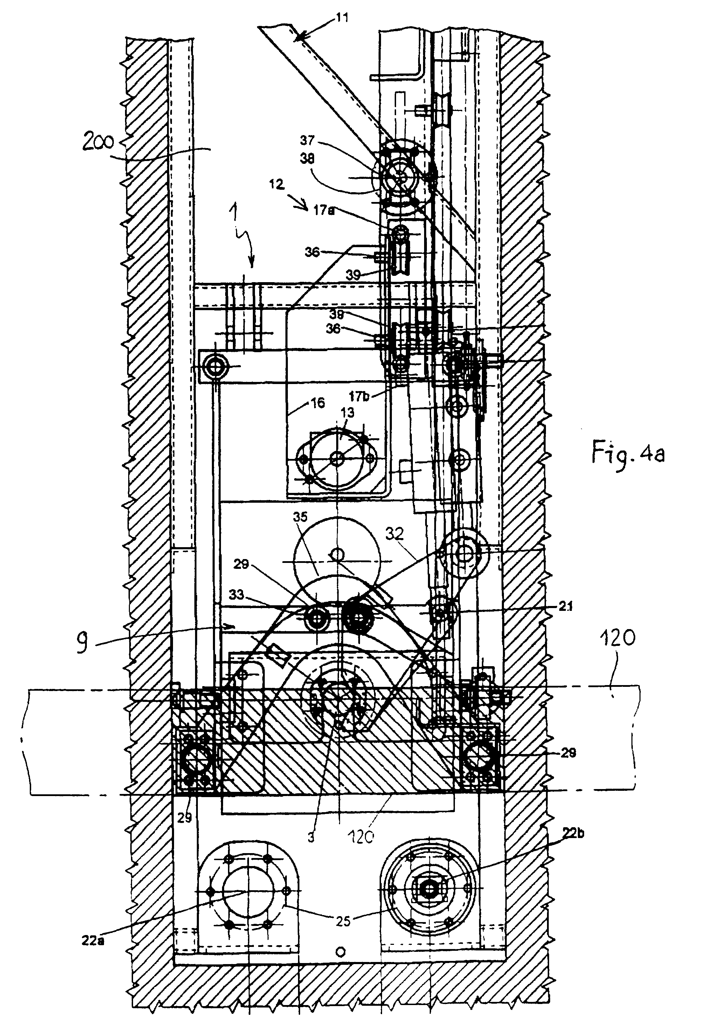

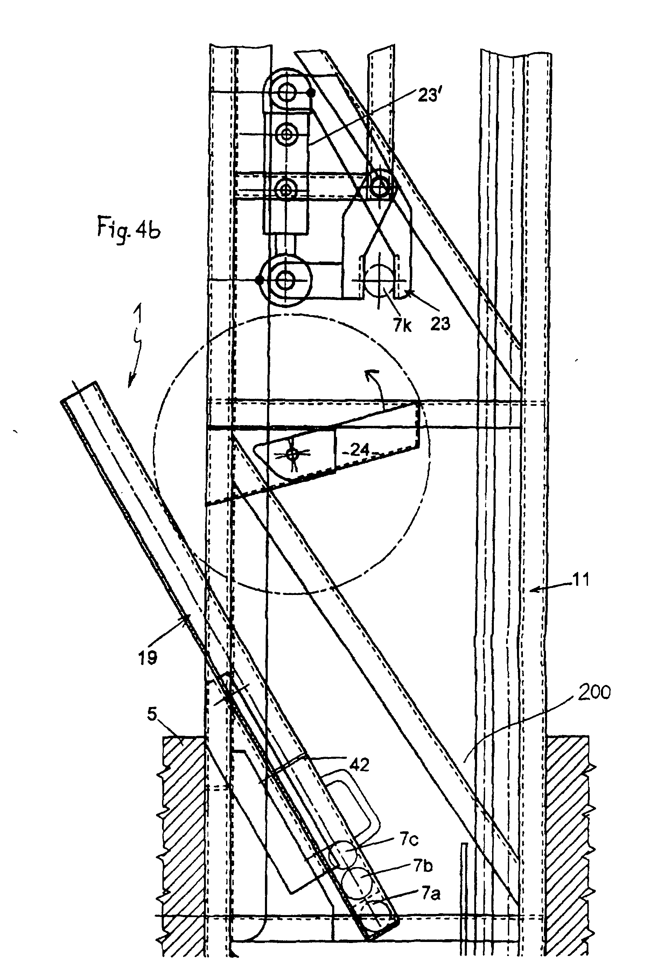

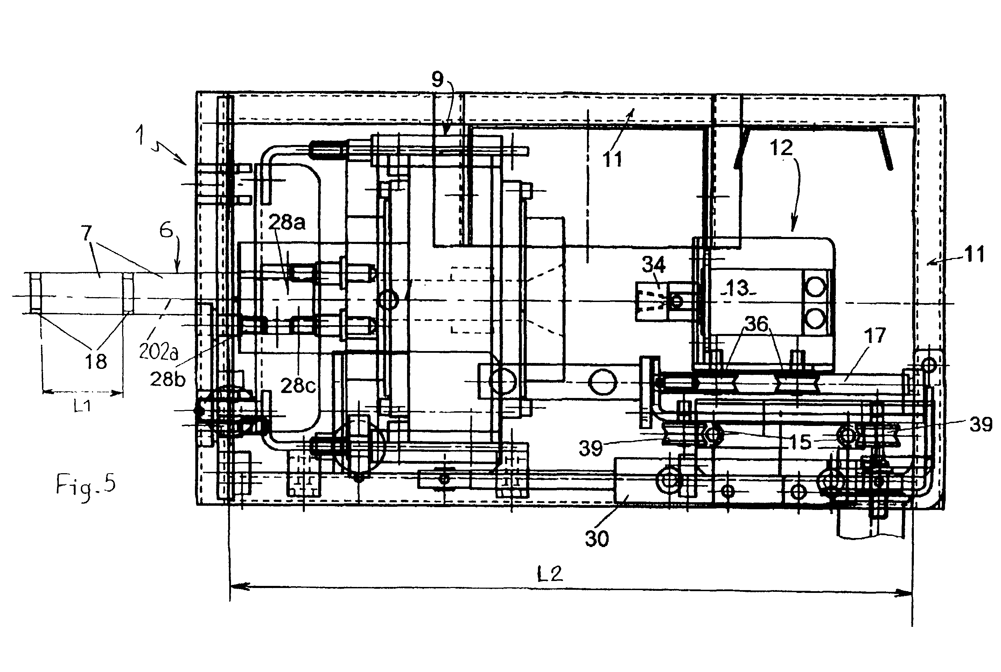

Les figures 3a, 3b et 4a, 4b ne comportent aucun train de tiges sur l'axe de forage 202a, pour faciliter la compréhension des dessins, au contraire de la figure 5 où l'on peut voir que le train de tiges 6 est constitué de tiges élémentaires 7 disposées les unes derrière les autres, vissées les unes aux autres à leurs extrémités.

Chaque élément de tige 7 présente une longueur axiale L1 (figures 3a et 5) assez nettement inférieure à la distance d séparant les parois avant 201a et arrière 201b du puits 200 où la machine de forage a été installée (figure 3a), ainsi qu'à la longueur L2 (mesurée parallèlement à l'axe des tiges 7) du bâti 11 (ou du moins de sa partie qui descend dans le puits), entre ses montants latéraux verticaux avant et arrière, repérés 11a, 11b sur la figure 3a.

Sur la figure 3a, un exemplaire 7d de ces tiges est vissé au manchon fileté 34 du moteur 13 appartenant au dispositif chargeur/extracteur.

Chaque tige filetée 7 comporte sur sa périphérie extérieure une gorge annulaire 18.

Comme on le voit sur la figure 3a, le chargeur/extracteur 12 se déplace d'une manière essentiellement verticale. La tige de forage 7d se déplace alors dans une trouée de transport essentiellement verticale 10'. Le dispositif d'entraînement de forage 9 peut, sur l'axe de forage 202a, coulisser le long de guides 29 à l'aide de pistons hydrauliques 30.

Pour presser le train de tiges 6, et donc pour pousser le forage vers l'avant, le dispositif d'entraînement du train de forage 9 saisit la tige 7 située le plus en arrière (c'est-à-dire se trouvant encore dans la zone de la tour de forage 11) et la totalité du dispositif d'entraînement de forage 9 est déplacée vers la gauche, en passant par la position représentée sur la figure 3a. Le dispositif d'entraînement de forage 9 se déplace ainsi alternativement entre la paroi avant 201a et le voisinage de la paroi arrière opposée 201b.

Le dispositif 9 peut, outre ce mouvement axial dans la direction de l'axe de forage 202a, tourner en outre le train de tiges, et ce tant pendant le mouvement linéaire que d'une manière séparée. Dans ce but, une mâchoire tournante 33, propre à serrer le train de tiges, peut tourner ou pivoter par rapport à son boîtier 35, d'une manière coaxiale à l'axe de forage 202a. Cette façon de faire sert à ajuster l'orientation, en coopération avec un biseau en disposition asymétrique contre la pointe du train de tiges.

Le dispositif d'entraînement de forage comporte une autre mâchoire 32, dite "de séparation", disposée en avant de la mâchoire tournante 33, et qui peut maintenir le train de tiges fixe en rotation par rapport à l'enveloppe 35 du dispositif d'entraînement de forage.

Une mâchoire de serrage supplémentaire 21 est également disposée solidaire de la tour de forage 11, au voisinage immédiat du trou de forage 202 par rapport au train de tiges 6. Cette mâchoire de serrage 21 est elle aussi, comme on le voit mieux sur la figure 4a, constituée de deux mâchoires, dirigées transversalement contre le train de tiges. Ces mâchoires sont entraînées par un vérin hydraulique 21', qui par l'une de ses extrémités est maintenu en position fixe par rapport à la tour de forage 11.

A l'extrémité inférieure de la tour, encore en-dessous du dispositif d'entraînement de forage 9, des cylindres de serrage 22a, 22b, courant dans la direction de l'axe de forage 202a, sont disposés à demeure contre la tour de forage 11. Les cylindres comportent une plaque de compression 25 au niveau de l'extrémité libre de leur tige de piston. Comme la tour de forage 11, dans cette zone, ne comporte pas de recouvrement extérieur, la sortie des tiges de piston de ces cylindres de serrage 22 (qui, si nécessaire, sont entraînées par un dispositif hydraulique), compriment leurs plaques de compression 25 contre les parois du puits de départ 200, et ainsi la tour de forage 11 contre les mêmes parois du puits 200. Ainsi, la totalité de la tour de forage 11 est fixée dans le puits de départ 200, ce qui est important pour l'alignement, par rapport au trou de forage commencé 202, de l'axe de forage 202a défini par le dispositif d'entraînement de forage 9 par rapport à la tour de forage 11.

Le chargeur/extracteur 12 est constitué, pour l'essentiel, du moteur 13 avec son manchon fileté 24, qui de préférence est directement disposé sur l'arbre de sortie du moteur. Ce manchon est muni d'un filetage adapté pour être vissé sur le filetage arrière des tiges 7, de façon à permettre leur assemblage, les unes avec les autres. Comme on le voit sur la figure 3a, il s'agit alors de préférence d'un filetage extérieur, appliqué le long d'une surface conique, sur la tige de forage 9, auquel cas on utilise de préférence une forme de filets circulaire. Le manchon fileté 34 présente en conséquence un filetage intérieur de sens contraire, et le moteur 13 est, par son axe de rotation, orienté parallèlement à l'axe 202a. Le moteur 13 peut alors se déplacer tant dans la direction de l'axe de forage 202a que perpendiculairement à cette direction (verticalement le long du bâti 11).

Dans ce but, le moteur 13 est fixé à un cadre de moteur 16. Le cadre 16 peut, à l'aide de roulettes 36 comportant sur leur périphérie extérieure une gorge annulaire, se déplacer suivant l'axe de forage 202a, le long de deux barres de préférence espacées l'une de l'autre dans le sens vertical, servant de guides 17 pour le cadre du moteur. Les guides 17 sont fixés sur un chariot 14, qui, à l'aide de préférence de roulettes 39, peut se déplacer dans la direction verticale le long des guides de chariot 15 en forme de barre disposées, dans la direction de l'axe de forage 202a, à une certaine distance dans la tour de forage 11, au voisinage du côté 201b.

Le moteur 13 peut, à l'aide du chariot élévateur chargeur/extracteur 14, être déplacé dans la direction verticale de façon à être aligné soit avec l'axe de forage 202a, dans sa position la plus basse, soit, dans sa position la plus haute (figure 4b), avec un dispositif preneur 23, disposé dans la zone supérieure de la tour de forage 11. Ce dispositif preneur est actionné à l'aide d'un vérin hydraulique 23', de préférence à double effet. Entre ces deux positions extrêmes (de préférence situées toutes deux en-dessous du niveau de la surface 5 du trottoir 208 ; figure 3b), on trouve, sur la trajectoire du moteur 13, la position de prélèvement du magasin 19 où sont prêtes des tiges de forage 7a, 7b, 7c "nouvelles". Ce magasin est pour l'essentiel constitué d'une gaine 20 de type profilé disposée en position oblique, l'inclinaison augmentant au maximum jusqu'à une position verticale. Les tiges de forage 7 y sont installées par en haut.

A son extrémité inférieure, la gaine 20 comporte une butée pour la tige de forage 7a la plus basse et est ouverte sur le côté arrière de cette tige dirigé vers le moteur 13.

Le magasin 19 dépasse alors de préférence au-dessus du niveau du sol 5, et s'étend vers l'extérieur ou latéralement par rapport à la tour de forage 11, pour que le personnel de manoeuvre puisse le remplir plus facilement avec les tiges de forage 7.

Quand le moteur 13 se trouve en alignement avec la tige de forage 7a logée dans la position de prélèvement du magasin 19, le moteur 13 peut, par un déplacement longitudinal le long de son axe de rotation, accompagné d'une rotation du manchon fileté 34, être vissé sur la tige de forage 7a. L'entraînement de cette dernière en rotation est empêché par le poids des tiges de forage disposées au-dessus et éventuellement par le poids d'une masse 42, disposée en outre dans le magasin 19. La descente vers le dispositif d'entraînement 9 du moteur 13, avec la tige de forage 7a, assure le transfert de cette tige jusqu'au train de tiges 6, pour raccordement.

Au-dessus de l'extrémité inférieure du magasin 19, dans la trajectoire verticale des tiges de forage ainsi transportées, et en-dessous du dispositif preneur 23, la goulotte oblique 24 est disposée de façon que son extrémité supérieure se trouve encore en-dessous du dispositif preneur 23. Une tige de forage 7, entraînée dans le dispositif preneur 23 par en haut à l'aide du chargeur/extracteur 12, écarte alors la goulotte oblique 24, qui peut être rabattue vers l'extérieur autour d'un axe de pivotement, à partir de cette trajectoire. Puis la goulotte oblique 24 revient, en raison de la force de gravité, en rabattement jusqu'à la position fonctionnelle représentée sur la figure 4b. Dans cette position fonctionnelle, les tiges de forage 7k, d'abord maintenues par le dispositif preneur 23, tombent dans la goulotte oblique 24 après avoir été lachées, et roulent le long en sortant latéralement de la tour de forage 11, où elles sont réceptionnées par le personnel de manoeuvre, pour vérification et rangement.

On va maintenant décrire le fonctionnement de ce dispositif de forage.

On part d'un forage déjà commencé, que l'on veut poursuivre.

Tout d'abord, le chariot 14 du dispositif chargeur/extracteur 12 est déplacé en position haute, avec son moteur 13 qui est alors en position arrière, près de la paroi arrière 202b.

Lorsque le manchon fileté 34 porté par le cadre 16 arrive en alignement avec les filets d'un élément de tige 7a, le plus bas de la pile contenue dans le magasin 19, il est avancé vers cette tige, via le piston 37, tout en étant entraîné en rotation par le moteur 13 jusqu'à être vissé à la tige 7a.

Les deux ressorts 38a, 38b assurent toute compensation nécessaire pour l'avance et le recul du piston.

Le chariot 14 redescend alors le long des guides 15, avec la tige prélevée vissée au manchon 34 (voir figure 3a, tige 7d, en position de transport).

Parvenu dans l'axe du trou de forage, le cadre porteur 16 est de nouveau avancé vers la paroi avant 201a du puits de départ 200 et l'extrémité frontale de l'élément de tige prélevé est mise au contact du dernier élément de tige du train de tiges 6 déjà en place (voir figure 5).

Par rotation du moteur 13, l'élément de tige prélevé est alors vissé à ce dernier élément arrière du train de tiges. Pendant le vissage, les mâchoires 33 serrent ce dernier élément du train de tiges.

Les mâchoires 33 sont ensuite desserrées et le dispositif d'entraînement 9 est reculé vers la paroi arrière 201b, jusqu'à ce que les mâchoires 33 entourent et serrent la tige prélevée qui vient d'être raccordée à l'arrière du train 6. Le manchon 34 peut ainsi être dévissé de cette tige.

Pendant le desserrage précité des mâchoires 33 et la translation arrière du dispositif 9, les mâchoires 21 serrent le train 6 pour l'empêcher de bouger, et en particulier de reculer.

Ensuite, les mâchoires 21 sont desserrées et le train de tiges ainsi rallongé suivant l'axe du trou est avancé axialement dans ce trou, via les pistons 30 (les mâchoires 33 sont toujours serrées pour faire tourner légèrement le train, en cas de désaxage, lors de son avance).

Pendant ce temps, le dispositif chargeur/extracteur 12 est de nouveau remonté vers le magasin 19.

A noter que la présence des capteurs 28a, 28b, 28c, disposés contre le dispositif d'entraînement de forage 9, et de préférence contre son boîtier 35, permettent de contrôler la position de ce dispositif 9 et du train de tiges 6 vis-à-vis de la direction 202a de forage. En particulier, si la gorge annulaire 18 quitte la zone du capteur 28a, ce dernier émet un signal d'erreur prévenant d'un disfonctionnement.

Une fois le trou 202 foré, le retrait du train de tiges 6, dont l'extrémité avant de tête a alors pénétré dans le second puits 204, va s'effectuer par retrait progressif des éléments de tiges 7, en sens inverse des opérations d'approvisionnement qui ont été présentées ci-avant.

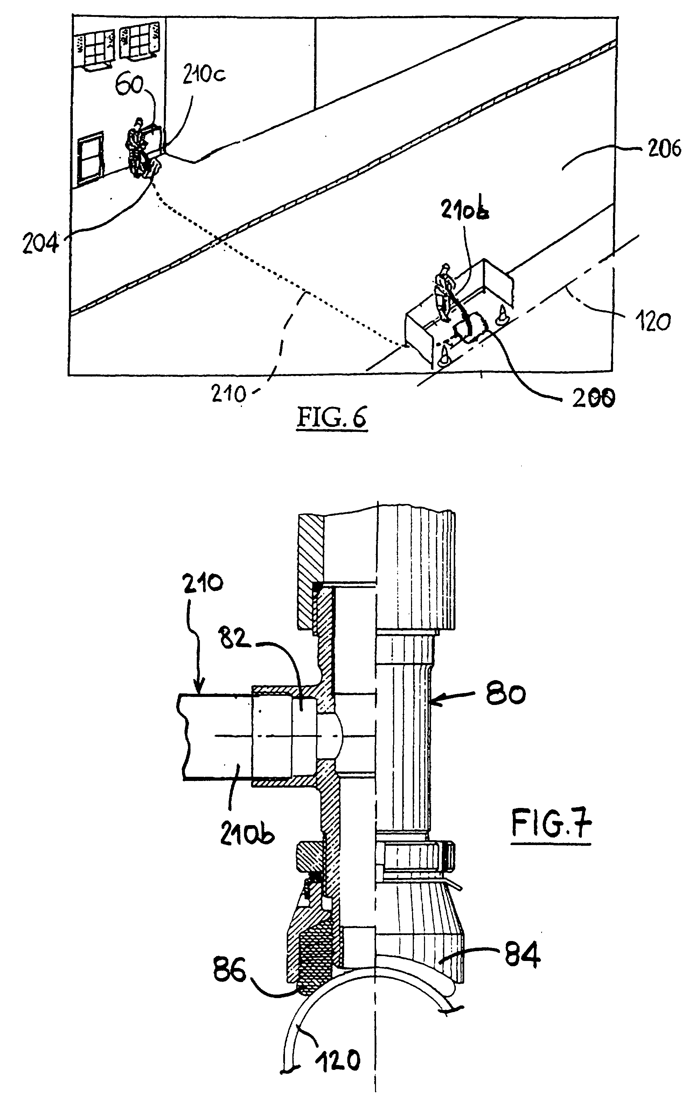

Lors de la rétraction du train de tiges par retrait progressif des éléments qui le constituent, la canalisation secondaire 210 (voir figure 6) est simultanément insérée dans le trou foré 202, par fixation à l'extrémité avant du train de tiges 6, ceci de manière tout à fait classique.

Pour éviter d'endommager lors de cette opération la canalisation secondaire 210 (telle qu'une conduite en matière plastique relativement souple, par exemple en polyéthylène), des moyens classiques de protection peuvent être prévus.

Après être passée sur toute la longueur du trou 202, l'extrémité "proximale" 210b de la conduite secondaire 210 est récupérée par un agent d'intervention en haut du puits 200, comme le montre la figure 6 où, par souci de clarté, on a déjà retiré de ce trou l'installation de forage dont on ne va maintenant plus se servir.

La seconde extrémité 210c de la même conduite 210 débouche d'ailleurs par l'ouverture supérieure du puits 204, à proximité d'une unité de raccordement obturable 60, également en surface, pouvant être constituée par un coffret de distribution relié à un usager.

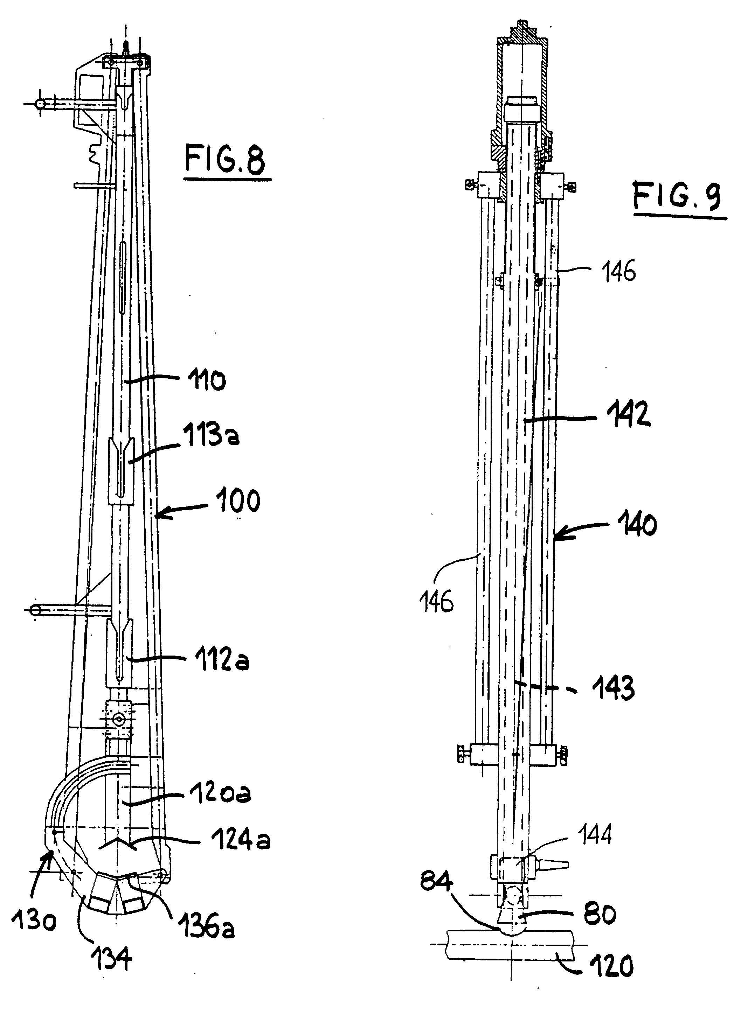

A ce stade du procédé, une prise de dérivation 80 du type SEIG (marque déposée), telle que celle représentée à la figure 7 (dont une description plus complète est donnée dans FR-95 10676 et/ou dans FR-95 10677) est reliée selon une technique classique à la première extrémité 210b de la conduite de dérivation 210 (soudage, vissage ...) par sa zone de raccord latéral 82.

Cette opération s'effectue donc (a priori) en surface.

En figure 8, on voit illustrée une réalisation de bâti 100 comprenant un premier cadre vertical support 110 comportant deux montants parallèles reliés par des entretoises. Le cadre possède des glissières de guidage 112a, 113a, fixées sur ses montants. Ces glissières permettent de faire glisser verticalement des outils servant au raccordement de la conduite de dérivation 210 à la canalisation principale 120, le long des montants, vers le fond du puits considéré (non représentés sur la figure).

Des pieds télescopiques sont fixés à la partie supérieure du cadre 110 sur chacun des montants, pour assurer une stabilisation du bâti par rapport au sol, lorsque le bâti est mis en place dans le puits.

A la partie inférieure du cadre 110, des bras tels que 120a, coulissant par rapport aux montants ajustables verticalement en position pour s'adapter aux différents diamètres des canalisations à enserrer, se terminent en partie inférieure par des premiers vés inversés tels que 124a, destinés à reposer sur la canalisation.

Le bâti 100 comprend également en partie inférieure du cadre un dispositif d'appui 130 comprenant un sabot 134 présentant deux parties en forme de seconds vés tels que 136a, destinés à venir en regard des premiers vés afin de réaliser une liaison précise et fiable avec la canalisation positionnée entre eux.

Avant d'entamer les étapes du raccordement proprement dit de la canalisation principale 120 et de la conduite de dérivation 210, il est nécessaire de nettoyer la conduite principale au niveau de la zone de fixation de la prise de dérivation 80.

En particulier, lorsque la conduite principale est en métal, celle-ci est en général recouverte d'une couche de résine protectrice qu'il va falloir éliminer pour pouvoir positionner la prise de dérivation 80 sur la conduite principale de façon satisfaisante.

Pour procéder à cette étape de nettoyage de la conduite principale 120, on utilise un premier outil de nettoyage que l'on va descendre puis remonter du puits 200, en utilisant le bâti 100. Pour la description de cet outil, on se reportera à la description de FR-9510676 et FR-95 10677.

Lorsque la conduite principale 120 est nettoyée, on retire le premier outil de nettoyage hors du puits 200. L'extrémité de la conduite de dérivation 210 reliée à la prise de dérivation 80, est alors descendue dans le puits 200, au moyen d'un second outil de positionnement et de fixation 140, représenté en figure 9. Pour assurer un positionnement convenable de la prise 80 sur la conduite principale 120 à l'endroit de sa seconde zone de raccord hémi-cylindrique 84 (en forme de selle), on tire simultanément sur la seconde extrémité 210c de la conduite de dérivation 210 débouchant par l'ouverture du puits 204, pour rattraper la "surlongueur" correspondante (figure 6).

Le second outil de positionnement et de fixation 140, représenté en figure 9, comprend un fût 142 creux possédant sur toute sa longueur un évidement intérieur 143. La partie inférieure de cet évidement comporte des moyens de maintien temporaire de la prise, ici constitués par un taraudage 144 destiné à recevoir un filetage de la partie supérieure de la prise de branchement 80.

La partie supérieure de la prise 80 est donc fixée de manière amovible à ce second outil de positionnement et de fixation, par exemple par vissage. La prise 80 étant en contact avec le conduit 120, par sa selle 84, on fait tourner le fût 142 par rapport à l'ensemble de fixation 146, ce qui engendre un déplacement axial dudit fût par rapport au bâti. On exerce ainsi un effort entre un joint d'étanchéité 86 contenu dans la prise de dérivation 80 (figure 7) et la canalisation 120 où du fluide peut circuler (si elle est prévue pour en véhiculer).

L'effort entre la prise 80 et la canalisation 120 étant appliqué, on vient positionner un sas (non représenté) par vissage sur l'extrémité supérieure filetée du fût 142. Ce sas permettra de travailler en charge de fluide, une fois la communication établie entre la conduite de dérivation 210 et la canalisation principale 120.

Ce système de sas peut, par exemple, être emprunté à une machine PIEDFORT (marque déposée) modèle M80.

Après avoir vérifié l'étanchéité du positionnement, on procède à la mise en communication de la canalisation principale 120 avec la conduite de dérivation 210.

On peut également retailler à longueur la conduite 210 du côté opposé ; puis on la raccorde de façon étanche à l'unité de raccordement 60.

Lorsque le sas est mis en place, on introduit à travers l'évidement intérieur 143 du second outil 140, un troisième outil (non représenté) de perçage de la conduite principale 120.

Lorsque la conduite est percée, on retire le troisième outil, et on procède à la fixation définitive de la prise 80 sur la conduite principale. Pour cela, on introduit de façon étanche, mais librement glissante, à travers l'évidement intérieur du second outil 140, un quatrième outil de fixation (non représenté).

Une fois la prise 80 fixée, on retire le quatrième outil, avant de vérifier une nouvelle fois l'étanchéité entre les conduites 120 et 210.

On peut ensuite procéder au retrait hors du puits d'accès du second outil de positionnement et de fixation 140, puis du bâti 100.

Pour tout ce qui précède concernant la mise en place de la conduite secondaire 210 et son raccordement au tronçon de canalisation principale 120 situé dans le puits 200, on se reportera, si nécessaire, à FR-95 10676 et/ou FR-95 10677.

Avant de refermer le puits d'accès 200, il peut rester une dernière étape au cours de laquelle il s'agit de former l'équivalent de la couche de résine protectrice éliminée par brossage au début de l'intervention.

On peut utiliser pour cela un cinquième outil dont la description et l'utilisation sont fournies dans FR-95 10677 et FR-95 10678.

Après avoir retiré hors des puits 200, 204, ou de leur environnement immédiat, les derniers appareils d'intervention, il ne reste plus qu'à les reboucher, la conduite secondaire 210 étant correctement branchée, sans avoir nécessité de tranchée en travers de la chaussée 206.

## Revendications

1. Procédé pour raccorder un tronçon de conduit principal enterré (120) à un conduit secondaire (210), comprenant les étapes consistant :
- à creuser un puits de départ (200, 204) et un puits d'arrivée (204, 200), l'un de ces puits étant creusé jusqu'à dégager l'environnement immédiat du conduit principal (120), l'autre ayant au moins sensiblement la même profondeur,
- à s'équiper d'un appareil de forage (10) comprenant une succession d'éléments de tiges de forage (7) à disposer bout à bout suivant un axe (202a) pour constituer un train de tiges de forage (7), propre à être poussé vers l'avant dans le sol, pour créer un trou de forage entre lesdits puits,
- à descendre ledit appareil (10) et les éléments de tiges de forage (7) dans l'un desdits puits (200) qui a une section horizontale inférieure à celle nécessaire pour qu'un homme puisse y manoeuvrer dedans, ledit appareil et le train de tiges de forage, lesdits éléments de tige (7) étant sélectionnés pour qu'ils présentent individuellement une longueur axiale inférieure à la distance séparant la paroi (201a) du puits dans lequel on va forer le trou de la paroi opposée (201b),
- à positionner dans ce puits (200) l'axe (202a) du train de forage pour forer, pratiquement au niveau ou à une hauteur d'élévation (h) immédiatement proche du conduit principal (120), transversalement à lui,
- à serrer latéralement le train de tiges de forage avec des moyens de serrage latéral et pousser le train de tiges sensiblement suivant cet axe,
- à faire tourner les moyens de serrage latéral, afin d'entrainer en rotation le train de tiges,
- après avoir foré sensiblement suivant cet axe jusqu'à relier les deux puits (200, 204), à passer le conduit secondaire (210) à travers le forage (202), de manière qu'une portion terminale (210b) de celui-ci soit située en haut du puits dans lequel est disposé le tronçon de conduit principal (120),
- à fixer là, à cette portion terminale, une première zone (82) d'une prise de branchement (80) pour le raccordement des deux conduits,
- à descendre dans le puits ladite portion terminale (210b) équipée de sa prise (80),
- à y fixer une deuxième zone (84) de ladite prise au conduit principal (120),
- et à refermer les puits (200, 204).

2. Procédé selon la revendication 1, **caractérisé en ce que** l'on réalise le puits de départ (200) sensiblement dans la verticale du tronçon de conduit principal (120) et on fore avec ledit appareil de forage (10) à partir de ce puits, vers le puits d'arrivée (204).

3. Procédé selon la revendication 1 ou la revendication 2, **caractérisé en ce que** l'on munit chaque élément du train de tiges d'une rainure annulaire et le dispositif de forage de trois détecteurs afin de détecter le positionnement axial de la rainure annulaire d'un élément du train de tiges.

4. Procédé selon l'une quelconque des revendications précédentes, **caractérisé en ce qu'**afin de faire avancer ledit train de tiges dans le trou de forage, on réalise en outre les étapes suivantes :
- on ajoute un élément supplémentaire à l'extrémité arrière du train de tige,
- on serre cet élément supplémentaire à l'aide de moyens de serrage annexes disposés à proximité immédiate du forage,
- on relâche les moyens de serrage latéral,
- on déplace les moyens de serrage latéral, puis on serre cet élément supplémentaire avec lesdits moyens de serrage latéral,
- on relâche les moyens de serrage annexes,
- on pousse ledit élément supplémentaire du train de tiges à l'aide des moyens de serrage latéral.

5. Procédé selon l'une quelconque des revendications précédentes, **caractérisé en ce que** l'on descend successivement chaque élément du train de tige dans l'un desdits puits par l'intermédiaire de moyens de chargement et d'extraction comprenant un moteur muni d'un manchon taraudé destiné à être vissé sur une tige filetée disposée à l'arrière de chacun des éléments à descendre.

6. Procédé selon l'une quelconque des revendications précédentes, **caractérisé en ce que** l'on muni l'avant du train de forage d'un biseau asymétrique, afin de modifier la direction de forage.

## Claims

1. A method of connecting a section of buried main conduit (120) to a secondary conduit (210) comprising the steps consisting of:
- digging a starting pit (200, 204) and a finishing pit (204, 200), one of these pits being dug out until the immediate surroundings of the main conduit (120) are cleared, the other being at least substantially of the same depth,
- providing a drilling device (10) comprising a series of drilling-rod elements (7) to be arranged end to end along an axis (202a) in order to constitute a train of drilling rods (7) suitable for being pushed forwards in the ground in order to create a bore-hole between the said pits,
- lowering the said device (10) and the drilling-rod elements (7) into one of the said pits (200) which has a horizontal section smaller than that necessary for a man to be able to operate the said device and the train of drilling rods therein, the said rod elements (7) being selected in a manner such that, individually, they have an axial length shorter than the distance separating the wall (201a) of the pit in which the hole is to be drilled from the opposite wall (201b),
- positioning the axis (202a) of the drilling train in the pit (200) in order to drill, practically at the level of or at a height (h) very close to that of the main conduit (120), transversely relative thereto,
- gripping the train of drilling rods laterally with lateral gripping means and pushing the train of rods substantially along this axis,
- causing the lateral gripping means to turn in order to rotate the train of rods,
- after drilling substantially along this axis until the two pits (200, 204) are connected, passing the secondary conduit (210) through the bore-hole (202) in a manner such that an end portion (210b) thereof is situated above the pit in which the section of main conduit (120) is disposed,
- fixing there, to this end portion, a first region (82) of a branch connector (80) for connecting the two conduits,
- lowering the said end portion (210b), equipped with its connector (80), into the pit,
- fixing a second region (84) of the said connector to the main conduit (120) therein,
- and closing up the pits (200, 204).

2. A method according to Claim 1, **characterized in that** the starting pit (200) is formed substantially vertically above the section of main conduit (120) and drilling is carried out with the said drilling device (10) from this pit, towards the finishing pit (204).

3. A method according to Claim 1 or Claim 2, **characterized in that** each element of the train of rods is provided with an annular groove and the drilling device is provided with three detectors in order to detect the axial positioning of the annular groove of an element of the train of rods.

4. A method according to any one of the preceding claims, **characterized in that**, in order to cause the said train of rods to advance in the bore-hole, the following steps are also performed:
- a further element is added to the rear end of the train of rods,
- this further element is gripped with the aid of additional gripping means disposed in the immediate vicinity of the bore,
- the lateral gripping means are released,
- the lateral gripping means are moved and then this further element is gripped by the said lateral gripping means,
- the additional gripping means are released,
- the said further element of the train of rods is pushed with the aid of the lateral gripping means.

5. A method according to any one of the preceding claims, **characterized in that** each element of the train of rods is lowered in succession into one of the said pits by means of loading and extraction means comprising a motor provided with a threaded sleeve to be screwed onto a threaded rod disposed at the rear of each of the elements to be lowered.

6. A method according to any one of the preceding claims, **characterized in that** the front of the drilling train is provided with an asymmetric chamfer in order to modify the direction of drilling.

## Patentansprüche

1. Verfahren zum Verbinden eines Stückes einer eingegrabenen Hauptleitung (120) mit einer Sekundärleitung (210) bestehend aus den Schritten:
- Ausgraben eines Ausgangsschachts (200, 204) und eines Ankunftsschachts (204, 200), wobei einer der Schächte so tief gegraben ist, dass er die unmittelbare Umgebung der Hauptleitung (120) freilegt und der andere eine im wesentlichen gleiche Tiefe aufweist,
- Bereitstellen einer Bohrmaschine (10), der eine Folge von Bohrschaftelementen (7) aufweist, die entlang einer Achse (202a) aneinander liegend anzuordnen sind, um eine Kette von Bohrschaftelementen (7) zu bilden, die nach vorne in den Boden gestoßen wird, um ein Bohrloch zwischen den Schächten zu schaffen,
- Ablassen der Maschine (10) und der Bohrschaftelemente (7) in einen der Schächte (200), der einen geringeren horizontalen Querschnitt besitzt, als nötig wäre dass ein Mensch dort die Maschine und die Bohrschaftelemente bedienen könnte, wobei die Schaftelemente (7) so ausgewählt sind, dass sie jeweils individuell eine axiale Länge aufweisen, die geringer ist, als der Abstand der die Wand (201a) des Schachts, in die man das Loch bohren will, von der gegenüber liegenden Wand (201b) trennt,
- Anordnen der Achse (202a) der Bohrschaftkette in diesem Schacht, um praktisch auf der Höhe oder in einem Höhenmaß (h) unmittelbar nahe der Hauptleitung und quer zu dieser zu bohren,
- Seitliches Einspannen der Bohrschaftkette durch Mittel zum seitlichen Einspannen und Stoßen der Schaftkette im Wesentlichen entlang dieser Achse,
- Drehenlassen der Mittel zum seitlichen Einspannen um die Schaftkette mit in Rotation zu versetzen,
- Nachdem im wesentlichen entlang dieser Achse gebohrt wurde bis die beiden Schächte (200, 204) verbunden wurden, Durchführen der Sekundärleitung (210) durch die Bohrung (202) in der Weise, dass ein Endabschnitt (210b) sich über dem Schacht befindet, in dem der Abschnitt der Hauptleitung (120) liegt,
- Befestigen eines ersten Teils (82) eines Abzweiganschlusses an diesem Endabschnitt, um die beiden Leitungen zu verbinden,
- Herablassen dieses Endabschnitts (210b), das mit dem Anschluss versehen ist, in den Schacht,
- Befestigen eines zweiten Teils (84) des Anschlusses an der Hauptleitung (120),
- Schließen der Schächte (200, 204).

2. Verfahren nach Anspruch 1, **dadurch gekennzeichnet, dass** man den Ausgangsschacht (200) im Wesentlichen in der Vertikalen des Hauptleitungsabschnitts (120) herstellt und dass man mit der Bohrmaschine (10) von diesem Schacht aus zum Ankunftsschacht (204) bohrt,

3. Verfahren nach Anspruch 1 oder 2, **dadurch gekennzeichnet, dass** jedes Element der Schaftkette eine Ringnut aufweist und die Bohrvorrichtung mit drei Fühlern ausgestattet ist, um die Position der Ringnut eines Elements der Schaftkette zu erkennen.

4. Verfahren nach einem der vorhergehenden Ansprüche, **dadurch gekennzeichnet, dass** man, um die Schaftkette in dem Bohrloch vordringen zu lassen, weiter die folgenden Schritte ausführt:
- man fügt an das hintere Ende der Schaftkette ein zusätzliches Element an,
- man spannt dieses zusätzliche Element mittels zugehörigen Spannmitteln ein, die unmittelbar neben der Bohrung angeordnet sind,
- man lockert die Mittel für das seitliche Einspannen,
- man verschiebt die Mittel für das seitliche Einspannen und spannt dann dieses zusätzliche Element mittels der Mittel für das seitliche Einspannen zusammen,
- man lockert die zugehörigen Spannmittel,
- man stößt das zusätzliche Element der Schaftkette mittels der Mittel für das seitliche Einspannen.

5. Verfahren nach einem der vorhergehenden Ansprüche, **dadurch gekennzeichnet, dass** man nacheinander jedes Element der Schaftkette mittels Beschickungs- und Aushebemitteln in einen der Schächte herablässt, die einen Motor besitzen, der eine Gewindemuffe besitzt, die zum Aufschrauben auf einen Gewindezapfen hinten an jedem Element, das herabgelasssen werden soll dient.

6. Verfahren nach einem der vorhergehenden Ansprüche, **dadurch gekennzeichnet, dass** man den Anfang der Bohrkette mit einer asymmetrischen Schrägkante versieht, um die Bohrrichtung zu modifizieren.
